# EUROPEAN PATENT SPECIFICATION

(11) **EP 1 645 789 B1**
(45) Date of publication and mention of the grant of the patent: **26.03.2008**
(21) Application number: 05108600.7
(22) Date of filing: 19.09.2005
(51) Int. Cl.: F16L 3/00

(54) **Clamp**
Klemme
Pince

(30) Priority: 08.10.2004 ES 200402286 U
(43) Date of publication of application: 12.04.2006
(73) Proprietor: Ceravalls Pujol, Ramon, 08211 Castellar del Valles (ES); Lopez Puche, Nuria, 08211 Castellar del Valles (ES)
(72) Inventor: Ceravalls Pujol, Ramon, 08211 Castellar del Valles (ES); Lopez Puche, Nuria, 08211 Castellar del Valles (ES)
(74) Representative: Ponti Sales, Adelaida

(56) References cited:
- US-B1- 6 460 813

## Description

The present invention relates to a clamp.

### BACKGROUND OF THE INVENTION

Clamps and the like which comprise a fixing base to a wall or a supporting element and a pair of arms which are designed to be adapted to the profile of the pipe to be fixed, are known.

The arms of said clamps are designed in such a way that they have a semicircular portion at its lower end which supports the pipe, and a strut which connects and hinges each arm to the fixing base. Thanks to these characteristics, said have been opened and the pipe has been inserted therein.

This is achieved due to the fact that when inserted, the pipe exerts a levering force at the lower ends of the arms, causing its upper ends to be moved closer to each other until they are blocked by means of an indentation which prevents them from being detached again.

Said clamps allow fixing pipes in a quick and easy way, without having to use additional pieces.

However, the described clamps have the drawback that their design makes difficult using devices, such as nail guns, for fixing them to a wall. This is because situating the end of the gun over the clamp is quite complicated, as the operator has to separate the two arms of the clamp to place the end of the gun over the base of the clamp.

Once the end of the gun has been positioned, it is necessary to place the clamp on the wall and shoot the nail. During this process, the operator has usually to hold the clamp with one hand to prevent if from falling and to be sure that the nail will be properly centered in the base of the clamp when it is propelled from the gun.

Thus, fixing the described clamps to a wall results in a slow and unsafe operation. It may be possible that the operator does not align properly the clamp with the outlet axis of the gun, and that the piece is not fixed suitably. Moreover, the operator may suffer any mishap if the gun is shot accidentally while supporting the clamp with his hand.

US 6 640 813 B1 describes a one-piece holder for suspending elongated objects.

### DESCRIPTION OF THE INVENTION

The aim of the clamp of the present invention is to solve the drawbacks of the devices known in the art, providing a clamp for pipes and the like, comprising two lateral arms for fixing the pipe between them and articulation means of each arm to a base for receiving a fixing element to a wall or the like propelled by a fixing device from an outlet mouth, each of said arms including a lower end closer to said base which closes the arms when pushing the pipe against it, and an upper end farther from said base which includes means for blocking both arms when they are closed, characterized in that it comprises, at the lower end of the arms, attaching means to the end of the outlet mouth of the fixing device, said attaching means to the fixing device comprising recesses at the lower end of the arms having a profile complementary to the contour of the mouth of the device, the base of the clamp being placed in front of the outlet orifice of the mouth of the device.

Thanks to these characteristics, the clamp of the invention can be readily placed at the end of a nail gun or a similar device, without the risk that it falls, and it is perfectly positioned before it is fixed to the wall.

Therefore, the operator does not have to hold the clamp before fixing it, as it is aligned with the outlet axis of the gun. Thus, possible accidents are avoided and the nail is fitted in the center of the base of the clamp.

Advantageously, the recesses include a lateral widening for inserting the mouth of the device inside them by means of a pivoting movement.

Preferably, the base comprises a projection or a recess for resting the mouth of the device on it in the pivoting movement.

Thanks to said widenings and to said projection or recess, the mouth of the gun is inserted in the clamp by pivoting the clamp with respect to the end of the mouth, in an easy and fast way.

According to an embodiment of the invention, the clamp comprises, at the lower end of the arms, al least one edge which includes a substantially flat surface for resting the pipe on it.

These edges allow to distribute the pressure exerted with the pipe against the lower end of the arms more uniformly, preventing the arms from undesired flexures which may difficult closing them.

Also advantageously, the base comprises a lower arch for cushioning the fixing element when receiving it.

Said arch absorbs the impact of the nail and prevents it from damaging the wall.

According to an embodiment of the present invention, the upper end of one of said arms is substantially farther from the base than the upper end of the other arm (2a) when they are not closed.

Thanks to said characteristics, an opening between the arms is formed, which facilitates inserting the end of the gun or the pipe inside the clamp, without having to open its arms previously.

On the other hand, the geometry of the clamp is asymmetric, which allows its arms to be adapted and to carry out a more effective fixation for a wider range of pipe diameters.

Preferably, the articulation means of each arm to the fixing base comprise a constant thickness strut for pressing the arms against the pipe.

Said struts help fastening the pipe more efficiently, as they have a constant thickness all along its length. The configuration of the struts allows them acting as a hinging point and a pressure point at the same time, which facilitates that the arms tighten the pipe in a more effective way. This facilitates the arms to be adapted to different diameters of pipes.

Advantageously, the means for blocking both arms when they are closed comprise a plurality of teeth with a profile complementary to the profile of the teeth of the other arm.

Said teeth allow that the arms are blocked once the pipe has been introduced in the clamp and the arms have been closed, and prevent the pipe from being released.

Preferably, the base comprises attaching means to the end of the outlet mouth of the fixing device.

According to an embodiment of the invention, the attaching means to the end of the outlet mouth of the fixing device placed in the base comprise a portion that is fitted inside said mouth.

These attaching means placed in the base allow fixing the clamp of the invention to the mouth of a gun at the inner surface of said mouth. This allows the clamp to be coupled to several types of gun mouths.

According to an aspect of the invention, the base of the clamp comprises slots for fixing it to a profile.

These slots allow fitting the clamp to a fixing profile fixed to a wall or ceiling in a quick and easy way.

Preferably, the part of the base between the slots and the lower surface of the base is narrower than the rest of the base. This provides an easier attachment between the clamp and the profile.

### BRIEF DESCRIPTION OF THE DRAWINGS

In order to assist the description of all that has been outlined above some drawings are attached which show schematically and solely by way of non-restrictive example a practical case of embodiment of the clamp of the invention, in which:
Figures 1, 2 and 3 are elevation, plan and perspective views of the clamp, respectively;
Figure 4 is another perspective view of the arms of the clamp of the invention fixed to a pipe;
Figures 5, 6 and 7 show the clamp of the invention being attached to the outlet mouth of a fixing device;
Figures 8 and 9 are perspective and side elevation views, respectively, which show an alternative embodiment of the clamp of the present invention;
Figures 10 and 11 show the operation of another embodiment of the clamp of the present invention.

### DESCRIPTION OF A PREFERRED EMBODIMENT

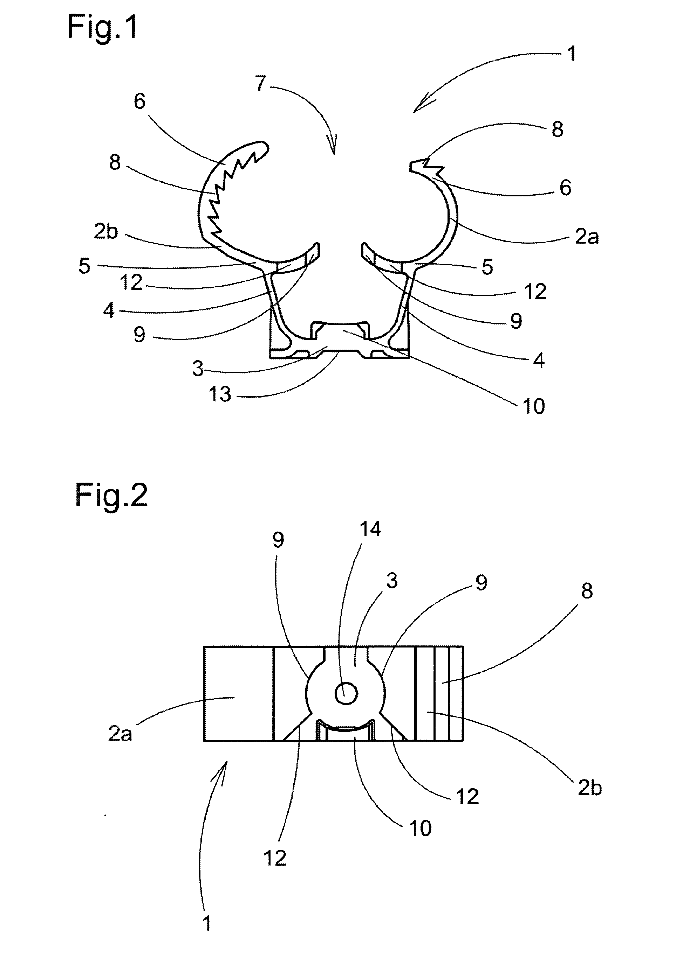

As shown in figures 1 to 3, the clamp 1 comprises a pair of arms 2a, 2b which are attached to a fixing base 3 by means of respective struts 4, and they include a lower end 5 and an upper end 6.

The clamp 1 is of the type that allows fixing a pipe 23 which is inserted through the opening 7, until it touches the lower ends 5 of the arms 2a, 2b. By pushing the lower ends 5 towards the base with the pipe 23, a lever force is created which moves the upper ends 6 of both arms 2a, 2b closer to each other until the teeth 8 in each of said arms are fitted automatically.

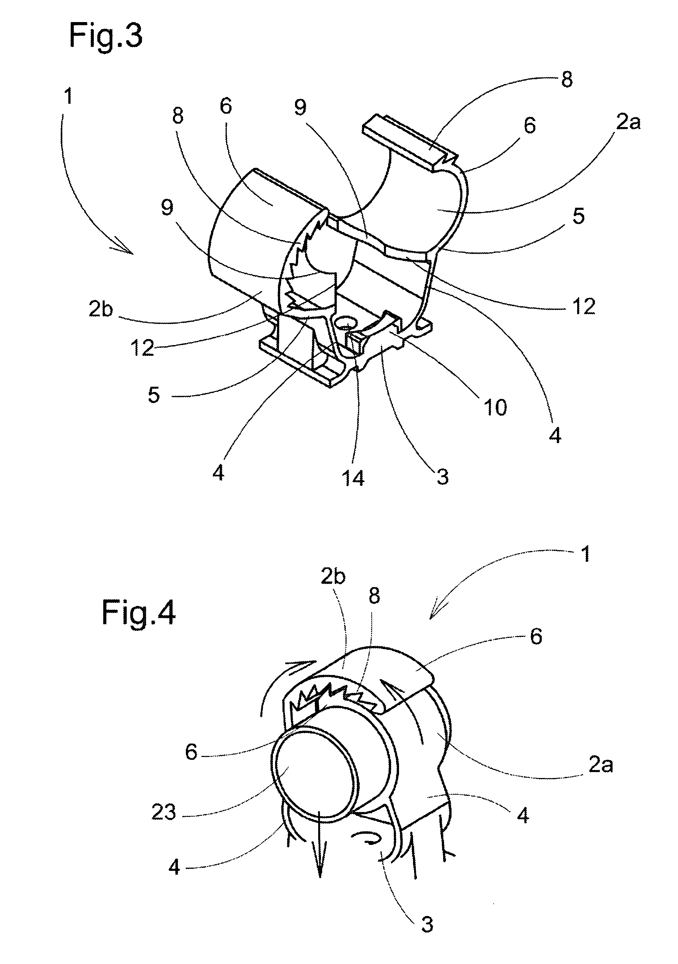

The pipe 23 is thus perfectly fixed, and the struts 4 transmit an additional lateral compression force to the arms 2a, 2b against the pipe 23, as shown in figure 4.

As explained above, the asymmetric arms 2a, 2b and the constant thickness struts 4 of the represented embodiment allow the clamp 1 to be adapted to pipes of different diameters.

Apart from for fixing pipes, the clamp 1 object of this invention has also been designed to be attached to the end of the outlet mouth 11 of a nail gun or the like.

To achieve this, the clamp 1 has semicircular recesses 9 at the lower ends 5 of each arm 2a, 2b. Said recesses have widenings 12 at one of its sides. Moreover, it also comprises a small projection 10 at one of the sides of the base 3, which function will be explained below.

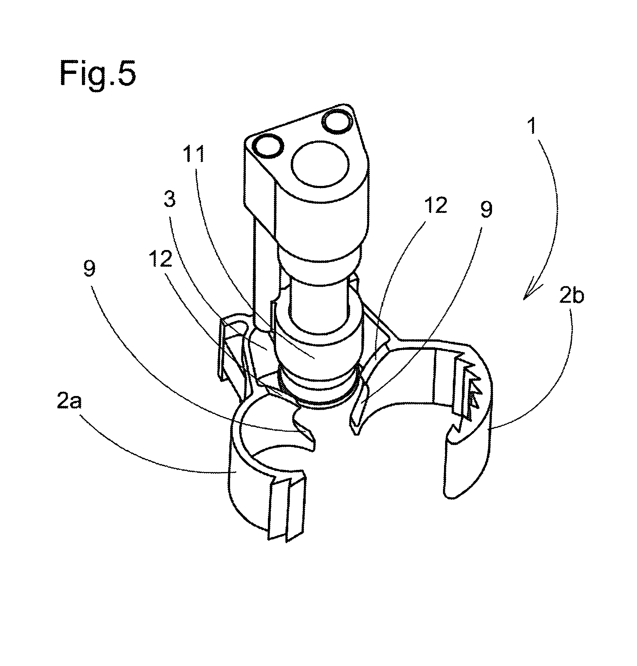

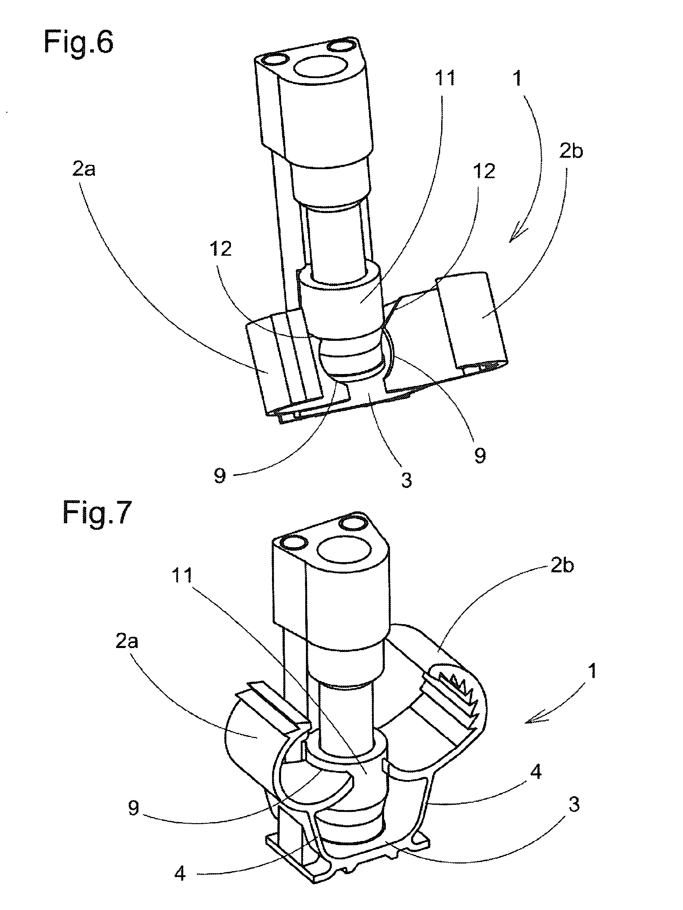

At a first stage (Figure 5) the clamp 1 is placed perpendicularly to the axis of the outlet mouth 11 of the gun. Subsequently (Figure 6) a pivoting movement of the clamp 1 is started, the clamp 1 rests on the edge of the gun by means of the projection 10 (hidden in the Figures by the gun) and the clamp 1 pivots with respect to it.

Then, the mouth 11 of the gun is inserted in the recesses 9 of the arms 2a, 2b through the widenings 12, until the base 3 of the clamp 1 is positioned in front of the outlet of the mouth 11 of the gun, as shown in Figure 7.

As it can be seen, the mouth 11 of the gun is housed in the recesses 9 of the clamp 1, in such a way that the operator can move the device with the clamp 1 perfectly aligned and positioned thereto, and fix the clamp to the wall without having to hold it. The propelled nail will be securely centered and housed inside the orifice 14 of the base 3 of the clamp 1. Although in the represented embodiment the recesses 9 are arch-shaped to be adapted to a cylindrical gun mouth 11, they may have any other shape.

With the aim of cushioning the impact of the nail over the base 3 of the clamp 1, said base 3 includes a lower arch 3 which absorbs part of the energy generated by the impact, and prevents damages to the wall.

The recesses 9 further have the advantage that they form an access opening to the base 3 of the clamp 1 for a screwdriver, without having to open the arms 2a, 2b, which substantially facilitates fixing the clamp 1 manually by means of screws.

Moreover, the arms 2a, 2b of the clamp 1 are considerably spaced from each other at their resting position in order to facilitate accessing inside the clamp 1.

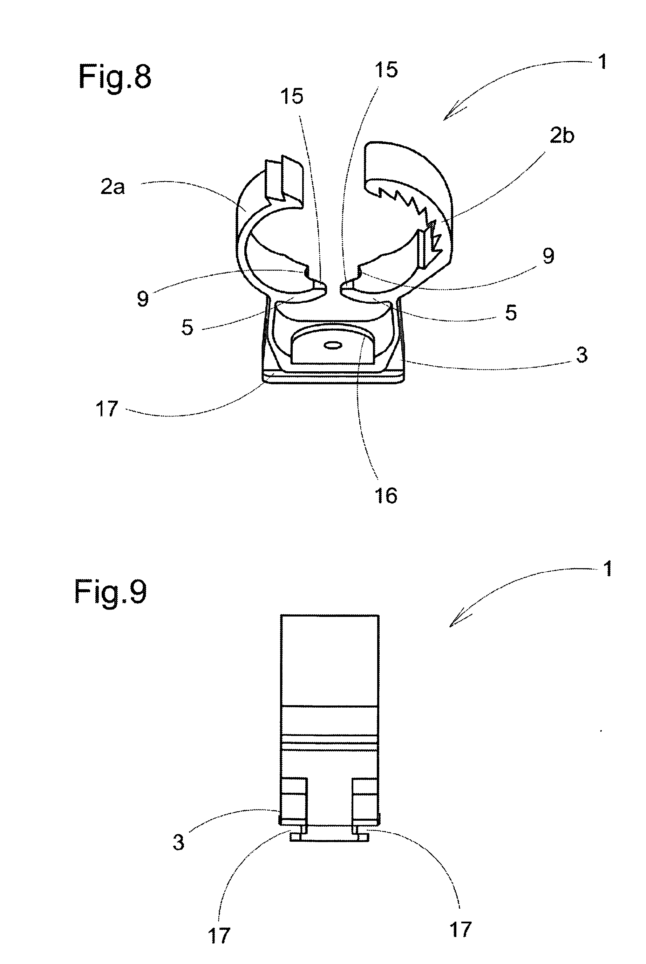

Figures 8 and 9 show another embodiment of the clamp 1 of the invention. In said embodiment, the clamp 1 comprises, at the lower end 5 of each arms 2a, 2b, an edge 15 located adjacent to the recesses 9, which includes a substantially flat surface for resting the pipe on it when the clamp 1 is being closed. These flat edges 15 help distributing the force carried out by the user when pushing the pipe towards the base 3 against said ends more uniformly, and prevent the arms 2a, 2b of the clamp 1 from being bent in undesired directions. Thus, a correct closing of the arms 2a, 2b is ensured.

The base 3 of the clamp 1 comprises a semicircular recess 16. The function of this recess is the same than the projection 10 of the above described embodiment, that is, to be a point of support for the outlet mouth 11 of the gun when the clamp 1 is pivoted with respect to said mouth 11 to attach them.

The base 3 of the clamp 1 further comprises a pair of slots 17 at its two lateral sides. These slots 17 are used to attach the clamp 1 to a C-shaped section type fixing profile. The slots 17 of the base 3 of the clamp receive the two ends of the section of the profile, so that the clamp can be attached to said profile by sliding it longitudinally. As it can be seen, with the aim of facilitating inserting and sliding the clamp 1 along the profile, the part of the base 3 of the clamp 1 which is located below the slots 17 is narrower than the part of the base 3 which is located above said slots 17.

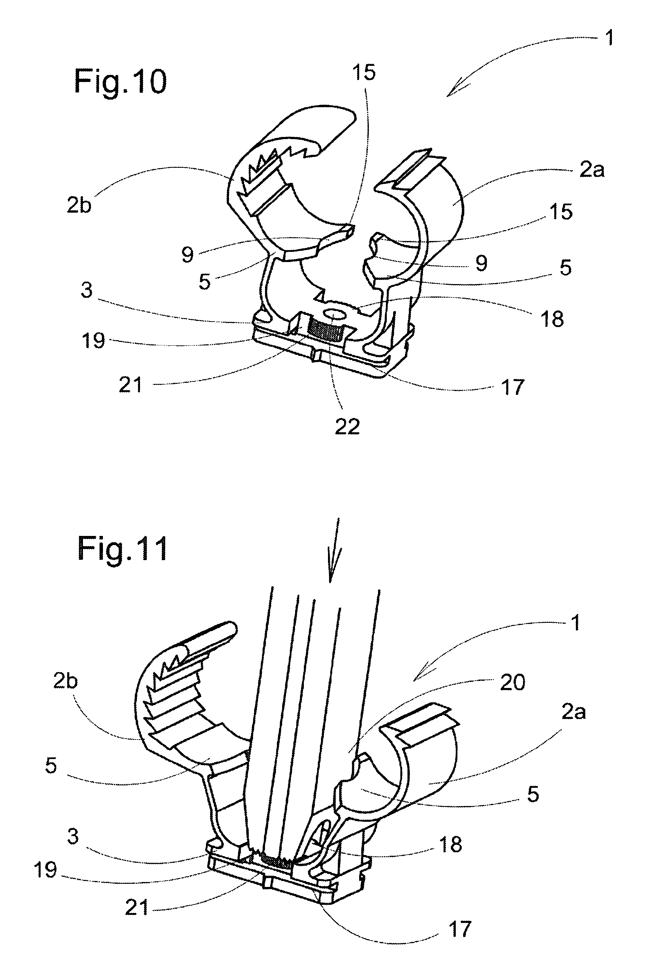

Figures 10 and 11 show another embodiment of the clamp 1 of the present invention. The clamp 1 comprises a portion 18 located in a narrowing 19 of the base 3, which is an attaching means of the clamp 1 to the inner surface of the mouth 20 of a gun. In this case, the mouth 20 of the gun comprises a rectangular section, with a pair of substantially parallel lateral walls. As it can be appreciated, the clamp 1 is attached to the mouth 20 of the gun by opening both arms 2a, 2b, and inserting said portion inside the mouth 20.

The portion 18 is fitted to the inner surface of the mouth 20 by means of perimeter teeth 21 which press against the inner surface of both lateral walls. The portion 18 also includes an orifice 22 for receiving the nail which will be propelled from the mouth 20.

Thanks to this portion 18, the clamp 1 of the invention can be fixed to any kind of gun at the outer or inner surface of its mouth. The portion 18 may have any other shape which is adapted to different shapes of mouths.

## Claims

1. Clamp (1) for pipes (10) and the like, comprising two lateral arms (2a, 2b) for fixing the pipe between them and articulation means of each arm (2a, 2b) to a base (3) for receiving a fixing element to a wall or the like propelled by a fixing device from an outlet mouth (11), each of said arms (2a, 2b) including a lower end (5) closer to said base (3) which closes the arms (2a, 2b) when pushing the pipe against it, and an upper end (6) farther from said base (3) which includes means for blocking both arms (2a, 2b) when they are closed, **characterized in that** it comprises, at the lower end (5) of the arms (2a, 2b), attaching means to the end of the outlet mouth (11) of the fixing device, said attaching means to the fixing device comprising recesses (9) at the lower end (5) of the arms (2a, 2b) having a profile complementary to the contour of the mouth (11) of the device, the base (3) of the clamp (1) being placed in front of the outlet orifice of the mouth (11) of the device.

2. Clamp (1), according to claim 1, **characterized in that** the recesses (9) include a lateral widening (12) for inserting the mouth (11) of the device inside them by means of a pivoting movement.

3. Clamp (1), according to claim 2, **characterized in that** the base (3) comprises a projection (10) for resting the mouth (11) of the device on it in the pivoting movement.

4. Clamp (1), according to claim 2, **characterized in that** the base (3) comprises a recess (16) for resting the mouth (11) of the device on it in the pivoting movement

5. Clamp (1), according to any of the preceding claims, **characterized in that** it comprises, at the lower end (5) of the arms (2a, 2b), al least one edge (15) which includes a substantially flat surface for resting the pipe on it.

6. Clamp (1), according to any of the preceding claims, **characterized in that** the base (3) comprises a lower arch (13) for cushioning the fixing element when receiving it.

7. Clamp (1) according any of the preceding claims, **characterized in that** the upper end (6) of one of said arms (2b) is substantially farther from the base (3) than the upper end (6) of the other arm (2a) when they are not closed.

8. Clamp (1), according to any of the preceding claims, **characterized in that** the articulation means of each arm (2a, 2b) to the fixing base (3) comprise a constant thickness strut (4) for pressing the arms (2a, 2b) against the pipe (10).

9. Clamp (1), according to any of the preceding claims, **characterized in that** the means for blocking both arms (2a, 2b) when they are closed comprise a plurality of teeth (8) with a profile complementary to the profile of the teeth (8) of the other arm (2a, 2b).

10. Clamp (1), according to any of the preceding claims, **characterized in that** the base (3) comprises attaching means to the end of the outlet mouth (11) of the fixing device.

11. Clamp (1), according to claim 10, **characterized in that** the attaching means to the end of the outlet mouth (11) of the fixing device placed in the base (3) comprise a portion that is fitted inside said mouth (11).

12. Clamp (1), according to any of the preceding claims, **characterized in that** the base (3) comprises slots (17) for fixing it to a profile.

13. Clamp (1), according to claim 12, **characterized in that** the part of the base (3) between the slots (17) and the lower surface of the base (3) is narrower than the rest of the base (3).

## Patentansprüche

1. Klammer (1) für Rohre (10) und dergleichen, aufweisend zwei seitliche Arme (2a, 2b) zum Befestigen des Rohrs zwischen diesen und ein Gelenkmittel jedes Arms (2a, 2b) an einer Basis (3) zum Aufnehmen eines Befestigungselements an einer Wand oder dergleichen, das mittels einer Befestigungsvorrichtung von einer Auslassöffnung (11) aus vorwärts bewegt wird, wobei jeder der Arme (2a, 2b), ein unteres Ende (5) näher bei der Basis (3), die die Arme (2a, 2b) schließt, wenn das Rohr dagegen gedrückt wird, und ein oberes Ende (6) weiter von der Basis (3) weg aufweist, das ein Mittel zum Verriegeln der beiden Arme (2a, 2b) aufweist, wenn sie geschlossen werden, **dadurch gekennzeichnet, dass** sie an dem unteren Ende (5) der Arme (2a, 2b) Anbringungsmittel für das Ende der Auslassöffnung (11) der Befestigungseinrichtung umfasst, wobei die Anbringungsmittel für die Befestigungsvorrichtung Aussparungen (9) an dem unteren Ende (5) der Arme (2a, 2b) umfassen, die ein Profil komplementär zu der Kontur der Öffnung (11) der Einrichtung aufweist, wobei die Basis (3) der Klammer (1) vor der Auslassöffnung der Öffnung (11) der Einrichtung angeordnet ist.

2. Klammer (1) nach Anspruch 1, **dadurch gekennzeichnet, dass** die Aussparungen (9) eine seitliche Aufweitung (12) zum Einsetzen der Öffnung (11) der Einrichtung in ihrem Inneren im Wege eine Schwenkbewegung aufweisen.

3. Klammer (1) nach Anspruch 2, **dadurch gekennzeichnet, dass** die Basis (3) einen Vorsprung (10) zum Ablegen der Öffnung (11) der Einrichtung an dieser bei der Schwenkbewegung aufweist.

4. Klammer (1) nach Anspruch 2, **dadurch gekennzeichnet, dass** die Basis (3) eine Aussparung (16) zum Ablegen der Öffnung (11) der Einrichtung an dieser bei der Schwenkbewegung aufweist.

5. Klammer (1) nach einem der vorhergehenden Ansprüche, **dadurch gekennzeichnet, dass** sie an dem unteren Ende (5) der Arme (2a, 2b) mindestens einen Rand (15) aufweist, der eine im Wesentlichen flache Fläche zum Ablegen des Rohrs an dieser aufweist.

6. Klammer (1) nach einem der vorhergehenden Ansprüche, **dadurch gekennzeichnet, dass** die Basis (3) eine untere Wölbung (13) zum Dämpfen des Befestigungselements umfasst, wenn dieses aufgenommen wird.

7. Klammer (1) nach einem der vorhergehenden Ansprüche, **dadurch gekennzeichnet, dass** das obere Ende (6) eines der Arme (2b) im Wesentlichen weiter von der Basis (3) entfernt ist als das obere Ende (6) des anderen Arms (2a), wenn sie nicht geschlossen sind.

8. Klammer (1) nach einem der vorhergehenden Ansprüche, **dadurch gekennzeichnet, dass** das Gelenkmittel jedes Arms (2a, 2b) an der Befestigungsbasis (3) eine Strebe (4) mit konstanter Dicke zum Drücken der Arme (2a, 2b) gegen das Rohr (10) aufweist.

9. Klammer (1) nach einem der vorhergehenden Ansprüche, **dadurch gekennzeichnet, dass** das Mittel zum Verriegeln der beiden Arme (2a, 2b), wenn diese geschlossen werden, eine Vielzahl von Zähnen (8) mit einem Profil komplementär zu dem Profil der Zähne (8) des anderen Arms (2a, 2b) aufweist.

10. Klammer (1) nach einem der vorhergehenden Ansprüche, **dadurch gekennzeichnet, dass** die Basis (3) Befestigungsmittel für das Ende der Auslassöffnung (11) der Befestigungseinrichtung aufweist.

11. Klammer (1) nach Anspruch 10, **dadurch gekennzeichnet, dass** die Anbringungsmittel für das Ende der Auslassöffnung (11) der Befestigungseinrichtung, angeordnet in der Basis (3), einen Bereich umfassen, der innenseitig der Öffnung (11) angeordnet ist.

12. Klammer (1) nach einem der vorhergehenden Ansprüche, **dadurch gekennzeichnet, dass** die Basis (3) Schlitze (17) zu ihrer Befestigung an einem Profil aufweist.

13. Klammer (1) nach Anspruch 12, **dadurch gekennzeichnet, dass** der Teil der Basis (3) zwischen den Schlitzen (17) und der unteren Fläche der Basis (3) schmaler ist als der übrige Teil der Basis (3).

## Revendications

1. Attache (1) pour tuyaux (10) et similaire, comprenant deux bras latéraux (2a, 2b), pour fixer le tuyau entre eux et des moyens d'articulation de chaque bras (2a, 2b) à une base (3), afin de recevoir un élément de fixation à une paroi ou similaire, propulsé par un dispositif de fixation, depuis une bouche de sortie (11), chacun desdits bras (2a, 2b) comprenant une extrémité inférieure (5) plus proche de ladite base (3) qui ferme les bras (2a, 2b) lorsque le tuyau est poussé contre elle, et une extrémité supérieure (6) plus éloignée de ladite base (3) qui comprend des moyens pour bloquer les deux bras (2a, 2b) quand ils sont fermés, **caractérisée en ce qu'**elle comprend, à l'extrémité inférieure (5) des bras (2a, 2b), des moyens de fixation à l'extrémité de la bouche de sortie (11) du dispositif de fixation, lesdits moyens d'attache au dispositif de fixation comprenant des cavités (9) à l'extrémité inférieure (5) des bras (2a, 2b) ayant un profil complémentaire du contour de la bouche (11) du dispositif, la base (3) de l'attache (1) étant placée face à l'orifice de sortie de la bouche (11) dudit dispositif.

2. Attache (1), selon la revendication 1, **caractérisée en ce que** les cavités (9) comprennent un élargissement latéral (12) pour insérer la bouche (11) du dispositif à l'intérieur de celles-ci, au moyen d'un mouvement pivotant.

3. Attache (1) selon la revendication 2, **caractérisée en ce que** la base (3) comprend une saillie (10) pour appuyer la bouche (11) du dispositif sur elle pendant le mouvement pivotant.

4. Attache (1) selon la revendication 2, **caractérisée en ce que** la base (3) comprend une cavité (16) pour appuyer la bouche (11) du dispositif sur elle pendant le mouvement pivotant.

5. Attache (1) selon l'une quelconque des revendications précédentes, **caractérisée en ce qu'**elle comprend, à l'extrémité inférieure (5) des bras (2a, 2b), au moins un bord (15) qui comprend une surface sensiblement plane pour appuyer le tuyau dessus.

6. Attache (1), selon l'une quelconque des revendications précédentes, **caractérisée en ce que** la base (3) comprend un arc inférieur (13) pour amortir l'élément de fixation lors de sa réception.

7. Attache (1) selon l'une quelconque des revendications précédentes, **caractérisée en ce que** l'extrémité supérieure (6) de l'un desdits bras (2b) est sensiblement plus éloignée de la base (3) que l'extrémité supérieure (6) de l'autre bras (2a) quand ils ne sont pas fermés.

8. Attache (1) selon l'une quelconque des revendications précédentes, **caractérisée en ce que** les moyens d'articulation de chaque bras (2a, 2b) à la base de fixation (3) comprennent un étai d'une épaisseur constante (4) pour comprimer les bras (2a, 2b) contre le tuyau (10).

9. Attache (1) selon l'une quelconque des revendications précédentes, **caractérisée en ce que** les moyens pour bloquer les deux bras (2a, 2b) quand ils sont fermés, comprennent une pluralité de dents (8) avec un profil complémentaire au profil des dents (8) de l'autre bras (2a, 2b).

10. Attache (1) selon l'une quelconque des revendications précédentes, **caractérisée en ce que** la base (3) comprend des moyens d'attache à l'extrémité de la bouche de sortie (11) du dispositif de fixation.

11. Attache (1) selon la revendication 10, **caractérisée en ce que** les moyens de fixation à l'extrémité de la bouche de sortie (11) du dispositif de fixation placé dans la base (3) comprennent une portion qui est adaptée à l'intérieur de ladite bouche (11).

12. Attache (1) selon l'une quelconque des revendications précédentes, **caractérisée en ce que** la base (3) comprend des fentes (17) pour la fixer à un profil.

13. Attache (1), selon la revendication 12, **caractérisée en ce que** la partie de la base (3) entre les fentes (17) et la surface inférieure de la base (3) est plus étroite que le reste de la base (3).
